(19) Europäisches Patentamt
European Patent Office
Office européen des brevets

(11) **EP 4 390 115 A1**

(12) **EUROPEAN PATENT APPLICATION**

(43) Date of publication:
26.06.2024 Bulletin 2024/26

(21) Application number: 22306970.9

(22) Date of filing: 21.12.2022

(51) International Patent Classification (IPC):
*F03D 7/02* (2006.01)   *F03D 13/25* (2016.01)
*F03D 80/80* (2016.01)

(52) Cooperative Patent Classification (CPC):
**F03D 7/0298; F03D 13/256; F03D 80/88;**
F05B 2260/964

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Université d'Aix-Marseille**
**13007 Marseille (FR)**
• **TotalEnergies OneTech**
**92400 Courbevoie (FR)**
• **Centre National de la Recherche Scientifique**
**75016 Paris (FR)**

• **Ecole Centrale de Marseille**
**13013 Marseille (FR)**

(72) Inventors:
• **CÔTE, Renaud**
**13007 MARSEILLE (FR)**
• **MATTEI, Pierre-Olivier**
**75016 PARIS (FR)**
• **GOURC, Etienne**
**75016 PARIS (FR)**
• **CAPALDO, Mattéo**
**92400 COURBEVOIE (FR)**

(74) Representative: **Plasseraud IP**
**66, rue de la Chaussée d'Antin**
**75440 Paris Cedex 09 (FR)**

(54) **A FLOATING WIND TURBINE WITH PASSIVE VIBRATION CONTROL SYSTEM**

(57) It is disclosed a floating wind turbine, comprising a mast, a nacelle and a plurality of rotating blades, the floating wind turbine being subjected to vibrations, and further comprising a vibration control system (20), characterized in that the vibration control system comprises a nonlinear energy sink (21), comprising a movable mass (210) and a coupling device (211) connecting the mass to a wall of the floating wind turbine, the coupling device having non-linear stiffness when biased in a direction perpendicular to the axis of the mast and being configured to perform non-linear viscous damping of a motion of the mass perpendicular to the axis of the mast.

FIG. 2

**Description**

TECHNICAL FIELD

The present disclosure relates to a floating wind turbine comprising a vibration control system.

STATE OF THE ART

Floating wind turbines are composed of slender and deformable structures operating in harsh environments combining waves, currents and turbulent winds. During the operation of a floating wind turbine, the latter may vibrate under the excitation of the environmental loads. The vibrations are transmitted in the floating foundation and mooring lines, increasing the overall ultimate loads and fatigue cycling.

To prevent environmental loads from becoming disruptive, the structures are dimensioned to verify several criteria; one of which being that the natural frequencies of the structure may be at a sufficient distance from the frequency content of the environmental loads.

However, this criterion is very difficult to fulfill in the context of offshore wind turbines, because such structures already have massive dimensions (for instance a height between 100 and 150 meters with the blades, and a mass of almost 1000 tons); which tend to reduce the natural speed of the rotors and bring the frequency of excitation caused by the rotors passing by the mast ("3p" frequency") to decrease and approach the frequencies of the waves and the wind, and because increasing said distance would require to further increase the dimensions and weight of the structure

It is therefore necessary to provide a solution to dampen vibrations, which makes it possible to bring the frequencies of the loads closed to the natural frequencies of the structure.

The use of linear resonator for the mitigation of resonant vibrations was disclosed in US989,958 and has been widely adopted ever since. These devices perform remarkably well when the dynamics properties of the system to be controlled are perfectly known, and the absorber is well tuned. However, these devices require heavy mass (about 10% of the mass of the system to be damped). Moreover, only a slight detuning highly degrades the performance in terms of vibration reduction. These devices are therefore not applicable to the mitigation of vibrations in floating wind turbines, as these are subject to varying loads.

To overcome these difficulties, the use of Nonlinear Energy Sinks (NES) constitutes a promising alternative. A NES is a small mass oscillator coupled to the host structure by means of a purely nonlinear stiffness. The lack of linear stiffness allows the NES to dissipate energy from the host structure within a large frequency band. The application of NES for controlling vibrations of floating wind turbines has for instance been studied in Zuo, H. and S. Zhu (2022). "Development of novel track nonlinear energy sinks for seismic performance improvement of offshore wind turbine towers". Mechanical Systems and Signal Processing 172, p. 108975.

However, nonlinear energy sinks also include drawbacks; one of which being the existence of detached resonance frequencies with high amplitude vibrations that can potentially be dangerous for the system to be controlled and must therefore be avoided.

SUMMARY OF THE INVENTION

The present disclosure aims at improving the prior art.

In particular, an aim of the present disclosure is to enable passive vibration control of a floating wind turbine.

Another aim of the present disclosure is enabling damping of vibrations of a floating wind turbine caused by external loads without incurring detached resonance.

To this end, it is disclosed a floating wind turbine comprising a mast, a nacelle and a plurality of rotating blades, the floating wind turbine being subjected to vibrations, and further comprising a vibration control system, characterized in that the vibration control system comprises a nonlinear energy sink, comprising a movable mass and a coupling device connecting the mass to a wall of the floating wind turbine, the coupling device having non-linear stiffness when biased in a direction perpendicular to the axis of the mast and being configured to perform non-linear viscous damping of a motion of the mass perpendicular to the axis of the mast.

In embodiments, the movable mass is positioned inside the mast or the nacelle of the turbine.

In embodiments, the vibration control system is further configured to maintain the motion of the mass within a plane perpendicular to the axis of the mast.

In embodiments, the vibration control system comprises a slide link connecting the mass to a wall of the turbine, the slide link extending perpendicular to the axis of the mast and being rotatable about the axis of the mast.

In embodiments, the mass is positioned within the mast of the turbine and the coupling device comprises at least one linear spring-dashpot extending transversally to the direction of motion of the mass. The linear spring-dashpot may comprise one end connected to the mass and another end suspended to a wall of the mast.

In embodiments, the linear spring-dashpot spring-dashpot is mounted on the mast by a ball-joint connection.

In embodiments, the vibration control system is further configured to apply linear stiffness and damping of a motion of the mass perpendicular to the axis of the mast. In embodiments, the vibration control device comprises a linear spring-dashpot extending perpendicular to the axis of the mast, and movable in rotation relative to the axis of the mast. The linear spring-dash pot's stroke may further be dimensioned to prevent the motion of the mass from reaching a wall of the turbine.

In embodiments, the vibration control device comprises an intermediate structure including:

- a linear spring-dashpot extending transversally to the direction of motion of the mass and
- a linear spring-dashpot extending perpendicular to the axis of the mast,

said intermediate structure being movable in rotation about the axis of the mast.

In embodiments, the vibration control device further comprises an additional damper having non-linear stiffness and configured to perform non-linear viscous damping of the motion of the intermediate structure.

In embodiments, the mass is positioned within the mast of the turbine, and the coupling device comprises two linear spring-dashpots connecting two opposite ends of the mass to the mast of the turbine. In this configuration, the mass may be connected to each linear spring-dashpot by a respective ball-joint connection, and the mass is asymmetric with respect to an axis formed by the two ball-joint connections. In embodiments, the mass is positioned within the nacelle of the turbine, said nacelle being rotative relative the mast, and the coupling device comprises a first linear spring-dashpot extending perpendicular to the axis of the mast, and the vibration control device further comprises a second linear spring-dashpot extending parallel to the direction of the nacelle and connecting the mass to a wall of the nacelle.

The floating wind turbine disclosed above, in which the vibration control system comprises a nonlinear viscous damping term in addition to a nonlinear stiffness, allows to damp the vibrations of the turbine and to remove any detached resonance. Moreover, the vibration control system is passive and may be integrated in the mast or in the nacelle of the turbine.

Moreover, this solution allows the weight of the shock absorbed to be reduced to up to 1% of the mass of the wind turbine to be damped.

DESCRIPTION OF THE DRAWINGS

Other features and advantages of the invention will be apparent from the following detailed description given by way of non-limiting example, with reference to the accompanying drawings, in which:

- Figure 1a schematically represents a front face of a floating wind turbine,
- Figure 1b schematically represents a side face of a floating wind turbine,
- Figure 2 schematically represents a first example of a non-linear energy sink integrated in the mast of a floating wind turbine, shown in a lateral view,
- Figure 3 schematically represents a second example of a non-linear energy sink integrated in the mast of a floating wind turbine, shown in a lateral view,
- Figure 4 schematically represents a third example of a non-linear energy sink integrated in the mast of a floating wind turbine, shown in a lateral view,
- Figure 5 schematically represents an example of a non-linear energy sink integrated in the nacelle of a floating wind turbine, shown in a lateral view,
- Figure 6 schematically represents a fourth example of a non-linear energy sink integrated in the mast of a floating wind turbine, shown in a top view,
- Figure 7 schematically represents a fifth example of a non-linear energy sink integrated in the mast of a floating wind turbine, shown in a lateral view,
- Figure 8 represents the performance in vibration control obtained in a floating wind turbine according to a numerical simulation.

DETAILED DESCRIPTION OF AT LEAST ONE EMBODIMENT

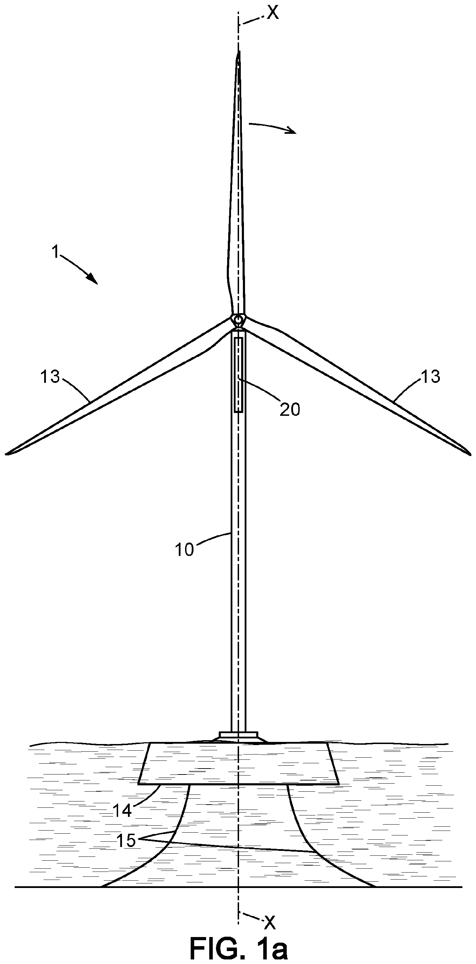

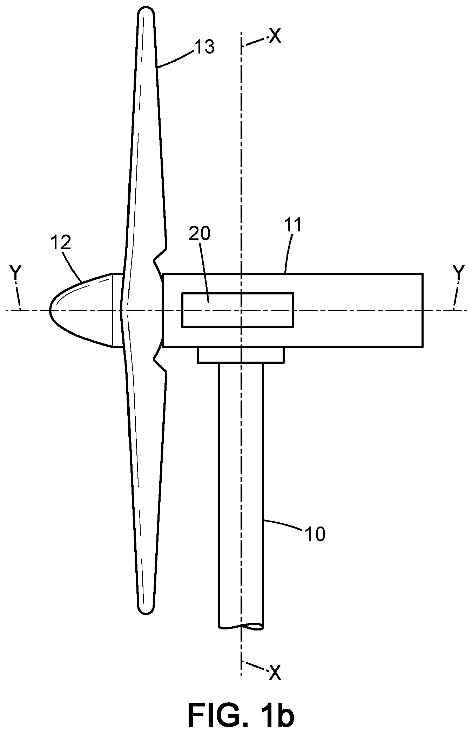

With reference to figures 1a and 1b is shown a floating wind turbine 1. The floating wind turbine 1 is configured to operate offshore, i.e. on a water body, for instance the sea or a lake.

The floating wind turbine 1 comprises a mast 10 which may be generally rectilinear and extend along an axis X-X. The floating wind turbine also comprises a nacelle 11, mounted on top of the mast 10 and extending along an axis Y-Y, which is perpendicular to the axis of the mast. The nacelle 11 may however be rotatably mounted to the mast about the axis X-X of the mast, in order to be orientable according to the direction of the wind.

With reference to figure 1b, the floating wind turbine further comprises a rotor 12, rotatably mounted on an end of the nacelle 11. The rotor 12 comprises a plurality of blades, for instance three blades 13. Each blade may be pivotably mounted around its respective axis. The nacelle 11 typically includes an electrical generator, and mechanical and electrical transmission means (not shown).

Back to figure 1a, the floating wind turbine 1 may further comprise a floating support structure 14 on which the mast 10 is mounted, the floating support structure 14 being configured to ensure buoyancy and stability to the floating wind turbine. The floating support structure 14 may comprise one or several floating elements, which may be connected together for increased stability. The floating support structure may further be anchored to the water floor by one or more anchoring lines 15.

In operation, the floating wind turbine may be subjected to various loads, including environmental loads such as waves, wind and currents, aero-structure interaction loads (for instance due to the blades passing by the mast) and mechanical loads related to inertia and control. These loads induce vibrations on the mast and hence the floating wind turbine may be described as a linear mass-spring-damper system. In what follows, and according to this model, the mass of the wind turbine will be noted mo, the stiffness of the spring will be noted ko and the damping ratio is denoted

$$\xi_0 = \frac{c_0}{2\sqrt{k_0 m_0}}$$ , with c0 the damping coefficient.

The floating wind turbine 1 further comprises a vibration control system 20 comprising a nonlinear energy sink 21 comprising a movable mass 210, and a coupling device 211 connecting the movable mass 210 to a wall of the floating wind turbine, the coupling device 211 having non-linear stiffness when biased in a direction perpendicular to the axis X-X of the mast, and being configured to perform non-linear viscous damping of a motion of the mass 210 perpendicular to the axis of the mast. In embodiments, the vibration control system, and in particular the movable mass 210, may be positioned in the mast 10 of the turbine 1. In this case, the coupling device 211 connects the mass 210 to a wall 101 of the mast. When the movable mass 210 is positioned in the mast 10, it is preferably positioned nearby an upper end of the mast, as the upper end of the mast is the portion undergoing the most important vibrations and hence the impact of the NES may be more important.

Alternatively, the vibration control system, and in particular the movable mass 210, may be positioned in the nacelle 11 of the turbine. In this case, the coupling device connects the mass 21 to a wall 111 of the nacelle 11.

The nonlinear stiffness and nonlinear viscous damping of the motion of the mast may be obtained using at least one linear spring-dashpot spring-dashpot which extends transversely to the motion of the mass and is therefore biased transversely by the motion of the mast. Indeed, a linear spring-dashpot spring-dashpot exhibits linear stiffness and performs linear damping when biased in a direction parallel to the direction along which it extends, but exhibits nonlinear stiffness and performs nonlinear damping when biased transversely.

By "linear spring-dashpot" is meant a system comprising a linear spring and a linear dashpot, possibly integrated in a single device. It is therefore a system which provides both linear stiffness and linear viscous damping.

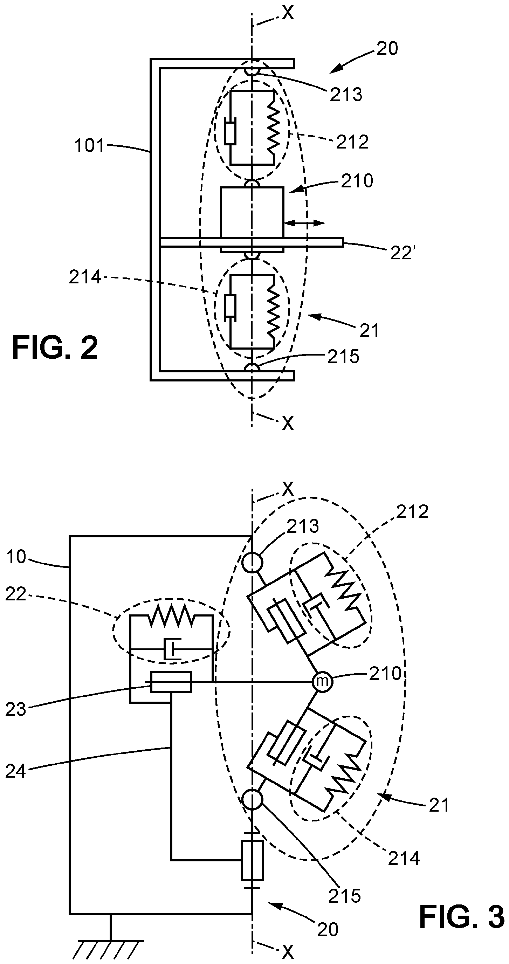

Thus, in embodiments, examples of which are shown in figures 2, 3, 4, 6 and 7, the movable mass 210 may be positioned within the mast 10 of the turbine and the coupling device 211 may comprise at least one linear spring-dashpot 212 extending transversally to the motion of the mass. This may be achieved for example by suspending a linear spring-dashpot, having a lower end connected to the mass, and an upper end connected to a wall 101 of the mast 10 at an anchoring position which is located above a position of equilibrium of the mass when the floating wind turbine is in a static, vertical position. In that position, the linear spring-dashpot 212 may thus extend parallel to the axis of the mast, or along a direction that forms an angle below 45°, preferably 30°, with said axis.

In embodiments, the suspended linear spring-dashpot may be connected to the wall of the mast by a ball-joint connection 213 in order to reduce friction on the motion of the linear spring-dashpot in a plane perpendicular to the direction along which it extends.

In embodiments, examples of which are shown in figure 2 and 3, the coupling device 211 may further comprise, in addition to the suspended linear spring-dashpot 212, a second linear spring-dashpot 214 that also extends transversally to the motion of the mass. In this case, the mass 210 may be positioned between the two linear spring-dashpots 212,214, with the first suspended spring-dashpot 212 extending from a wall of the mast to an upper end of the mass, and a second spring-dashpot 214 extending from a lower end of the mass to a wall of the mast, with the anchoring points of the spring-dashpots forming an axis parallel to the axis X-X of the mast. The second linear spring-dashpot 214 may also be connected to the wall of the mast by a ball-joint connection 215.

In embodiments, the vibration control system 20 is further configured to apply linear stiffness on a motion of the mass 210 perpendicular to the axis X-X of the mast and perform linear damping of said motion. This may for instance be achieved, when the mass is positioned inside the mast 10, by the vibration control system 20 comprising an additional linear spring-dashpot 22 that extends perpendicular to the axis X-X of the mast, and which is movable in rotation about an axis parallel to this axis, as in the examples described in more details below represented in figures 3, 4, 6 and 7. Alternatively, and as schematically shown in figure 2, a spiral spring 22' which axis is parallel to X-X and coupled to a linear viscoelastic damper may provide the linear stiffness and damping in any direction perpendicular to the axis X-X.

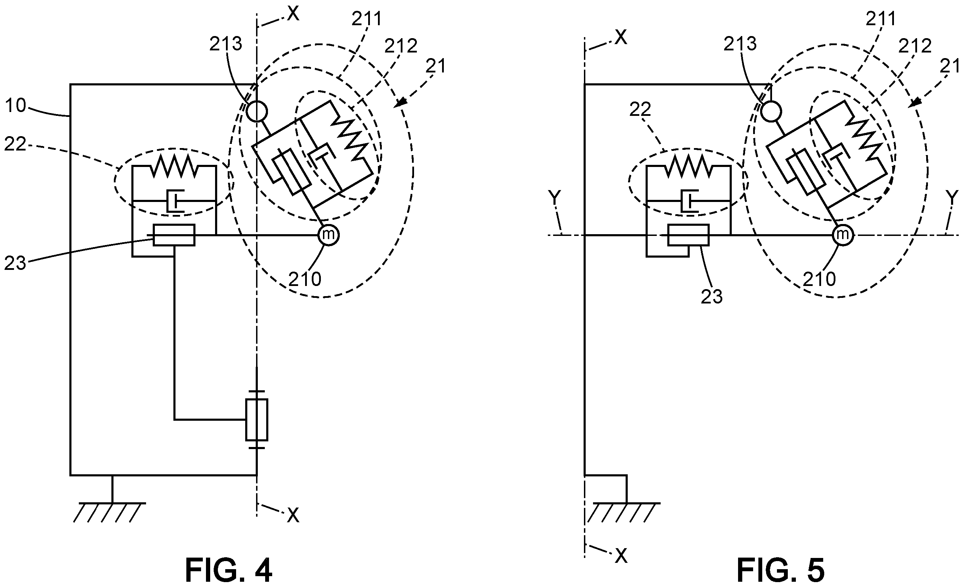

When the mass is positioned within the nacelle 11, with reference to figure 5, linear stiffness and damping may be achieved by the vibration control system 20 comprising an additional linear spring-dashpot 22 that extends parallel to the axis Y-Y of the nacelle. As the nacelle is rotatable relative to the axis X-X of the mast, the additional linear spring-dashpot 22 connected on one end to the mass 210 and on the other end to the wall 111 of the nacelle may also rotate relative to the axis of the mast according to the direction of the wind.

Providing a dedicated device 22, 22' to apply linear stiffness and damping in the direction of motion of the mass enables finely controlling the linear stiffness and the linear damping coefficient applied to the mass.

Therefore, denoting x(t) the displacement of a point of wind turbine, for instance a point located at the upper end of the mast, and q(t) the motion of the movable mass, with w(t)=x(t)-q(t), then with the classical convention $\dot{x}(t) = \frac{dx(t)}{dt}$ , the motion of the two degrees of freedom system formed by the wind turbine and the mass can be written as:

$$m_0\ddot{x}(t) + c_0\dot{x}(t) + k_0x(t) + c_N\big(1 + 2v_Nw^2(t)\big)\dot{w}(t) + k_{1N}w(t) + k_{3N}w(t)^3$$
$$= A\cos(\omega t)$$

$$m_N\ddot{q}(t) - c_N\big(1 + 2v_Nw^2(t)\big)\dot{w}(t) - k_{1N}w(t) - k_{3N}w(t)^3 = 0$$

Where $k_{3N}$ is the cubic stiffness coefficient and $c_Nv_N$ is the nonlinear viscous damping coefficient of the coupling device 211 when biased in a direction perpendicular to the axis X-X of the mast, $k_{1N}$ is the linear stiffness, and $c_N$ is the linear damping coefficient of the additional device 22, 22' for instance of the additional linear spring-dashpot.

To these differential equations initial conditions must be imposed: $x(0) = x_0, \dot{x}(0) = \dot{x}_0, q(0) = q_0, \dot{q}(0) = \dot{q}_0$

The solution of this system can be calculated numerically, for example using the NSolve Function of the software Mathematica (version 13, 2021) edited by Wolfram Research, Inc.

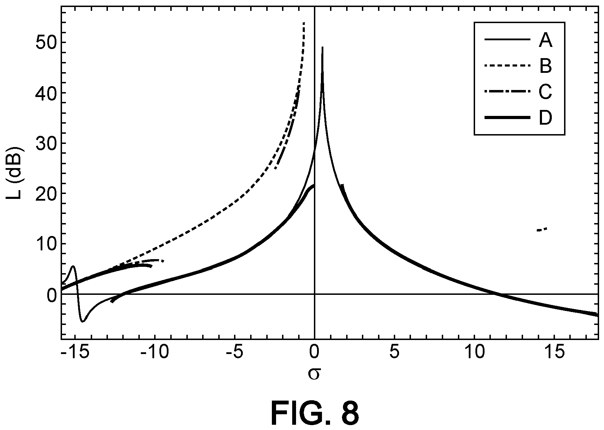

With reference to figure 8, are shown results obtained by numerical simulation of the vibrational behavior of a floating wind turbine comprising a non-linear energy sink. The results are given in decibel, calculated as 20Log(|L|/Lr), where L(A,f)=x_{rms}(A,f)/A where x_{rms}(A,f) is the root mean square value of the steady state floating wind turbine amplitude for a given amplitude A and forcing frequency f and x_{rms}(A,f) is estimated by averaging the value of x(t) over the last 1/2h of motion, and $L_r$ = 1 is the reference level. On the axis of abscissae are values of σ where $\sigma = (\frac{\omega}{\omega_0} - 1)/\epsilon$ . The parameters employed for the simulation are A=10 000N, $k_0$=10$^7$N/m, $m_0$=10$^6$ kg, co=3200N.s/m,

$\epsilon = \frac{m_N}{m_0} = 0.02$, $\mu_N = \frac{c_N}{c_0} = 0.2$, $\delta_N = \frac{k_{1N}}{(m_N.\omega_0^2)} = 0.5$ , and $K_N = \frac{k_{3N}}{(m_N.\omega_0^2)} = 43$ . Curve A corresponds to the floating wind turbine with a movable mass 210 to which is only applied linear stiffness and damping, i.e. without any nonlinear stiffness of nonlinear viscous damping applied to it: $k_{3N} = 0$ *and* $v_N = 0$. It can be observed that the response of the floating wind turbine exhibits two peaks : the one corresponding to the lowest frequency corresponds to the maximum response of the NES, and the other one corresponds to the maximum response of the wind turbine. Curve B is obtained for a non-null nonlinear stiffness and a null nonlinear damping, showing a high amplitude spurious resonance below natural resonance of the wind turbine and a small detached resonance above natural resonance of the wind turbine. Curve C is obtained for a non-null nonlinear stiffness and a nonlinear damping $v_N$ = 800 where it can be observed that the detached resonance curve splits into two stable branches, one at low frequency with low amplitude and one with high frequency and amplitude, this last one being to be avoided. Curve D is obtained for a non-null nonlinear stiffness and a nonlinear damping $v_N$ = 922, the smallest value that cancels the high amplitude detached resonance curve.

In embodiments, the vibration control system 20 may further be configured to maintain the motion of the mass 210 within a plane perpendicular to the axis X-X of the mast. Therefore, it is ensured that the motion of the mass is perpendicular to the axis of the mast and hence that the non-linear stiffness and non-linear viscous damping of the coupling device 211 are applied to the mass. However, the mass may be enabled to have a motion in any direction within the plane perpendicular to the axis X-X, in order to allow the direction of motion to change according to the direction of the loads applied to the mast. Indeed, according to the direction of the wind, of the waves and of the current, the axis about which the mast oscillates may vary. Allowing the mass to move in any direction perpendicular to the motion of the mast thus enables damping vibrations of the wind turbine in all situations.

The vibration control system 20 may for instance comprise a slide link 23 connecting the mass to a wall of the turbine, the slide link extending perpendicular to the axis X-X of the mast, and being movable in rotation about the axis of the mast. The slide link then ensures that the motion of the mass is perpendicular to the axis X-X of the mast, and the direction of the motion can change according to the direction of the loads applied to the mast and hence according to the motion of the mast. The slide link 23 may also enable a rotation about the axis along which it extends.

In embodiments, with reference for instance to figure 3, when the mass is positioned within the mast 10, the slide link 23 may be connected at one end to the mass 210 and at the other end to an intermediate structure 24 that is pivotably rotatable relative to an axis parallel to the axis X-X of the mast. In other embodiments, as shown in the example of figure 5, when the mass 210 is positioned within the nacelle 11, the slide link 23 may extend along the axis Y-Y of the nacelle, said direction being perpendicular to the axis X-X of the mast, and may comprise one end connected to the mass 210 and the other end connected to a wall 111 of the nacelle. Alternatively, maintaining the mass 210 within a plane perpendicular to the axis X-X of the mast may be performed by suitably tuning the stiffness of the nonlinear energy sink and/or the linear stiffness applied to the mass in the direction of its motion (i.e. perpendicular to the axis of the mast).

When the floating wind turbine comprises a slide link 23 or a linear spring-dashpot 22 providing linear stiffness and damping of the motion of the mass perpendicular to the axis X-X of the mast, is if further possible to dimension the stroke of the slide link and/or the linear spring-dashpot to prevent the potion of the mass from reaching a wall of the turbine, in particular a wall of the mast when the mass is positioned within the mast.

In embodiments, the nonlinear energy sink may be bistable, i.e exhibit two stable positions of stability. The interest of bistable nonlinear energy sink has been shown in the article by V. Iurasov and P.-O. Mattei, "Bistable nonlinear damper based on a buckled beam configuration", Nonlinear Dynamics, 2019. (hal-02369738). This may be achieved for instance by using a mass which is asymmetric relative to the coupling device, for instance which center of gravity is offset relative to the axis formed by the connection points between the mass and the two dashpots to which it is connected.

With reference to figures 2 to 7, various examples of a vibration control device 20 will now be described.

On figures 2 to 4, 6 and 7 are shown a plurality of examples of nonlinear energy sinks 21 in which the mass 210 is positioned within the mast 10 of the floating wind turbine 1. According to a first example represented in figure 2, the mass 210 is positioned within the mast 10 of the turbine and the coupling device 211 comprises two linear spring-dashpots 212, 214 that extend generally along a direction parallel to the axis X-X of the mast 10. The mass 210 is interposed between the two spring-dashpots 212, 214, with each spring-dashpot connecting a respective end of the mass to a wall 101 of the mast, via a respective ball-joint connection 213,215. The two spring-dashpots may be connected to walls of the mast at anchoring points forming an axis parallel to the axis X-X of the mast. In order to set a linear stiffness and linear damping of the motion of the mass in a direction perpendicular to the axis of the mast, the vibration control device may further comprise an additional damper, for instance in the form of a spiral spring coupled to linear viscoelastic damper 22'.

Alternatively, as shown in figure 3, the additional damper may comprise an additional linear spring-dashpot 22 extending perpendicularly to the axis X-X of the mast. In this example, the vibration control device also comprises a slide link 23 extending parallel to the additional linear spring-dashpot 22, the latter and the slide link and being mounted on an intermediate structure 24 movable in rotation relative to an axis that is parallel to the direction of the mast.

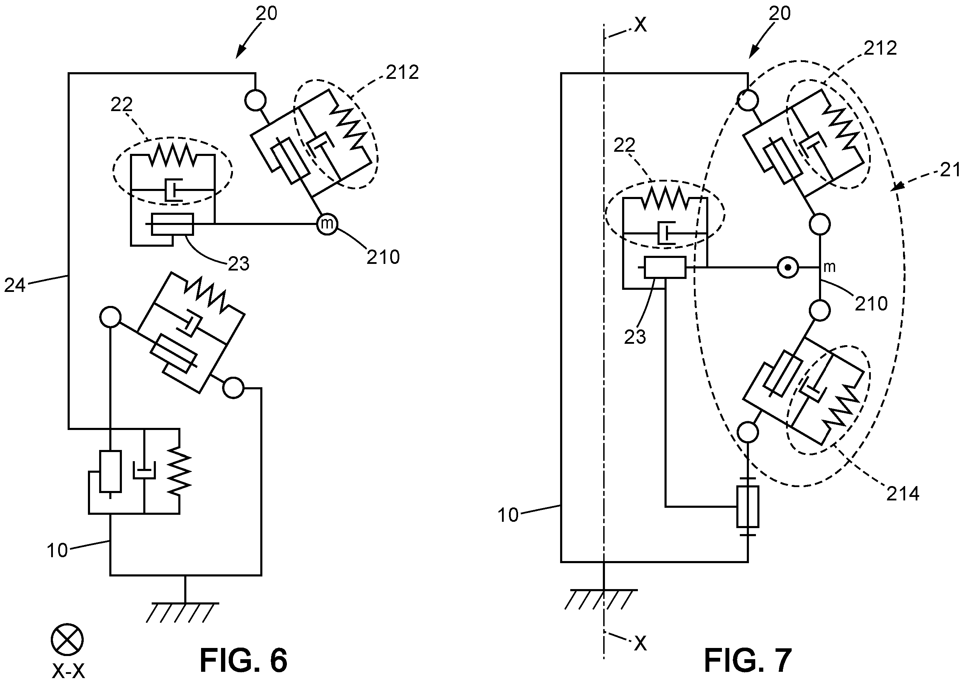

In a variant of this embodiment shown in figure 7, the mass is asymmetric relative to the axis formed by the ends of the two spring-dashpots 212, 214 to which it is connected, in order to provide a bistable system.

According to an example shown in figure 4, the coupling device 211 of the nonlinear energy sink 21 comprises a single linear spring-dashpot 212 connected at one end to the mass 210 and at the other end to the wall of the mast by a ball-joint connection 213. The linear spring-dashpot 323 may be connected to the mass by its lower end and suspended by its upper end. The vibration control device 20 further comprises an additional linear spring-dashpot 22 and a slide link 23 extending perpendicularly to the axis X-X of the mast and movable in rotation relative to an axis parallel to said axis X-X. To this end, the slide link 23 and additional linear spring-dashpot 22 are connected by one end to the mass and by the other end to an intermediate structure 24 movable in rotation about an axis parallel to the axis X-X of the mast.

According to still another embodiment shown in figure 6 (figure 6 being a top view of the vibration control system contrary to the other figures), the coupling device 211 of the NES comprises a linear dashpot 212 extending transversely to the motion of the mass within a horizontal plane, and an additional linear dashpot 22 and slide link 23 also extending within a horizontal plane. The mass 210 thus has a motion that is along the axis of the slide link 23. Furthermore these elements are mounted on an intermediate structure 24 which is mounted in translation relative to the mast according to an axis which is perpendicular to the axis X-X of the mast and perpendicular to the slide link 23. The translation according to the axis X-X may be subject to both linear and non-linear stiffness 240, 240', and to both linear and non-linear damping 241, 241'. This embodiment allows a horizontal motion of the mass without the use of rotation devices.

With reference to figure 5, is shown still another embodiment in which the mass 210 is positioned within the nacelle 11, and the coupling device 211 comprises a linear spring-dashpot 212 extending transversely to the motion of the mass, and connected to a wall of the nacelle by a ball-joint connection. Said motion of the mass is maintained in a direction perpendicular to the axis X-X of the mast using a slide link 23. The slide link can for instance extend parallel to the axis Y-Y of the nacelle. The vibration control device 20 further comprises a linear spring-dashpot 22 extending parallel to the axis Y-Y of the nacelle to provide linear stiffness and damping of the motion of the mass according to said direction. Last, as the nacelle 11 can rotate relative to the mast, the direction of the motion 10 of the mass can also rotate relative to the mast according to the direction of the wind on the floating wind turbine.

As shown in the cinematic schemes of figures 3, 4, 5, 6 and 7, the linear spring-dashpots that are biased transversely by the motion of the mass may further be guided by an additional slide link 25, in order to force the motion of the linear spring-dashpots along their respective direction and prevent them from having a pendular motion. It should however be noted that even though the guiding function is represented on the figures by a device which is distinct from the spring, this function may also be performed by the spring.

**Claims**

1. A floating wind turbine (1), comprising a mast (10), a nacelle (11) and a plurality of rotating blades (13), the floating wind turbine being subjected to vibrations, and further comprising a vibration control system (20),
   **characterized in that** the vibration control system (20) comprises a nonlinear energy sink (21), comprising a movable mass (210) and a coupling device (211) connecting the mass to a wall of the floating wind turbine, the coupling device having non-linear stiffness when biased in a direction perpendicular to the axis of the mast and being configured to perform non-linear viscous damping of a motion of the mass (210) perpendicular to the axis of the mast.

2. A floating wind turbine (1) according to claim 1, wherein the movable mass (210) is positioned inside the mast (10) or the nacelle (11) of the turbine.

3. The floating wind turbine (1) according to claim 1 or 2, wherein the vibration control system (20) is further configured to maintain the motion of the mass within a plane perpendicular to the axis (X-X) of the mast (10).

4. The floating wind turbine (1) according to claim 3, wherein the vibration control system (20) comprises a slide link (23) connecting the mass (210) to a wall of the turbine (1), the slide link extending perpendicular to the axis (X-X) of the mast and being rotatable about the axis of the mast.

5. The floating wind turbine (1) according to any of the preceding claims, wherein the mass (210) is positioned within the mast (10) of the turbine and the coupling device (211) comprises at least one linear spring-dashpot (212) extending transversally to the direction of motion of the mass (210).

6. The floating wind turbine (1) according to claim 5, wherein the linear spring-dashpot (212) comprises one end connected to the mass and another end suspended to a wall (101) of the mast (10)

7. The floating wind turbine (1) according to claim 5 or 6, wherein the linear spring-dashpot (212) is mounted on the mast by a ball-joint connection (213).

8. The floating wind turbine (1) according to any of the preceding claims, wherein the vibration control system (20) is further configured to apply linear stiffness and damping of a motion of the mass perpendicular to the axis (X-X) of the mast.

9. The floating wind turbine (1) according to claim 8, wherein the vibration control device (20) comprises a linear spring-dashpot (22) extending perpendicular to the axis (X-X) of the mast (10), and movable in rotation relative to the axis (X-X) of the mast.

10. The floating wind turbine (1) according to claim 9, wherein the linear spring-dashpot's (22) stroke is further dimensioned to prevent the motion of the mass from reaching a wall of the turbine (1).

11. The floating wind turbine (1) according to claim 9 in combination with claim 5, wherein the vibration control device (20) comprises an intermediate structure (24) including:

    - the linear spring-dashpot (212) extending transversally to the direction of motion of the mass and
    - the linear spring-dashpot (22) extending perpendicular to the axis of the mast, said intermediate structure (24) being movable in rotation about the axis (X-X) of the mast.

12. The floating wind turbine (1) according to claim 11, wherein the vibration control device (20) further comprises an additional damper having non-linear stiffness and configured to perform non-linear viscous damping of the motion of the intermediate structure.

13. The floating wind turbine (1) according to any of the preceding claims, wherein the mass (210) is positioned within the mast (10) of the turbine, and the coupling device (211) comprises two linear spring-dashpots (212, 214) connecting two opposite ends of the mass to the mast of the turbine.

14. The floating wind turbine (1) according to claim 13, wherein the mass (10) is connected to each linear spring-dashpot (212, 214) by a respective ball-joint connection (213, 215), and the mass (10) is asymmetric with respect to an axis formed by the two ball-joint connections.

15. The floating wind turbine (1) according to any of the preceding claims, wherein the mass (10) is positioned within the nacelle (11) of the turbine (1), said nacelle being rotative relative the mast (10), and the coupling device (211) comprises a first linear spring-dashpot (212) extending perpendicular to the axis (X-X) of the mast, and the vibration control device (20) further comprises a second linear spring-dashpot (22) extending parallel to the direction of the nacelle (Y-Y) and connecting the mass (210) to a wall of the nacelle (11).

FIG. 1a

FIG. 1b

FIG. 2

FIG. 3

FIG. 4

FIG. 5

FIG. 7

FIG. 6

FIG. 8

Europäisches
Patentamt

European
Patent Office

Office européen
des brevets

# EUROPEAN SEARCH REPORT

Application Number

EP 22 30 6970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 296 182 A (UNIV XIAN TECHNOLOGY) 1 October 2019 (2019-10-01) | 1-3, 5-10, 12-14 | INV. F03D7/02 F03D13/25 F03D80/80 |
| Y | * paragraph [0001] * | 9-12,15 | |
| A | * paragraph [0022]; figure 1 * * paragraph [0035]; figure 2 * | 4 | |
| X | EP 3 441 609 A1 (GEN ELECTRIC [US]) 13 February 2019 (2019-02-13) * paragraph [0001] - paragraph [0002] * * paragraph [0018]; figure 5 * * paragraph [0012] - paragraph [0013] * * paragraph [0021] - paragraph [0023] * | 1,2 | |
| Y | CN 111 396 498 A (ZHEJIANG WINDEY CO LTD) 10 July 2020 (2020-07-10) * paragraph [0021] * | 9-12 | |
| A | US 2020/271183 A1 (JIANG ZHIYU [CN] ET AL) 27 August 2020 (2020-08-27) * paragraph [0007] - paragraph [0008]; figure 2 * | 4 | |
| Y | US 2022/065223 A1 (GUPTA MRANAL [DK] ET AL) 3 March 2022 (2022-03-03) * paragraph [0050] - paragraph [0057] * | 15 | |

TECHNICAL FIELDS SEARCHED (IPC)

F03D

The present search report has been drawn up for all claims

| Place of search | Date of completion of the search | Examiner |
|---|---|---|
| The Hague | 15 June 2023 | Tack, Gaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6970

15-06-2023

| Patent document cited in search report | | Publication date | Patent family member(s) | | Publication date |
|---|---|---|---|---|---|
| CN 110296182 | A | 01-10-2019 | NONE | | |
| EP 3441609 | A1 | 13-02-2019 | EP | 3441609 A1 | 13-02-2019 |
| | | | US | 2019048855 A1 | 14-02-2019 |
| CN 111396498 | A | 10-07-2020 | NONE | | |
| US 2020271183 | A1 | 27-08-2020 | CN | 107906165 A | 13-04-2018 |
| | | | US | 2020271183 A1 | 27-08-2020 |
| | | | WO | 2019091021 A1 | 16-05-2019 |
| US 2022065223 | A1 | 03-03-2022 | EP | 3899252 A1 | 27-10-2021 |
| | | | US | 2022065223 A1 | 03-03-2022 |
| | | | WO | 2020125893 A1 | 25-06-2020 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 989958 A

**Non-patent literature cited in the description**

- **ZUO, H. ; S. ZHU.** Development of novel track nonlinear energy sinks for seismic performance improvement of offshore wind turbine towers. *Mechanical Systems and Signal Processing,* 2022, vol. 172, 108975

- **V. LURASOV ; P.-O. MATTEI.** Bistable nonlinear damper based on a buckled beam configuration. *Nonlinear Dynamics,* 2019